# EUROPÄISCHE PATENTSCHRIFT

(11) **EP 1 648 729 B1**
(45) Veröffentlichungstag und Bekanntmachung des Hinweises auf die Patenterteilung: **01.09.2010**
(21) Anmeldenummer: 04741167.3
(22) Anmeldetag: 17.07.2004
(51) Int. Cl.: B60K 23/08

(54) **STEUERVORRICHTUNG FÜR EIN ZUMINDEST ZEITWEISE VIERRADGETRIEBENES KRAFTFAHRZEUG**
CONTROL DEVICE FOR AN AT LEAST PARTIALLY FOUR-WHEEL DRIVEN MOTOR VEHICLE
DISPOSITIF DE COMMANDE POUR VEHICULE AUTOMOBILE A QUATRE ROUES MOTRICES AU MOINS DE FAÇON INTERMITTENTE

(30) Priorität: 24.07.2003 DE 10333654
(43) Veröffentlichungstag der Anmeldung: 26.04.2006
(73) Patentinhaber: Bayerische Motoren Werke Aktiengesellschaft, 80809 München (DE)
(72) Erfinder: BILLIG, Christian, 80939 München (DE)
(86) Internationale Anmeldenummer: PCT/EP2004/008092
(87) Internationale Veröffentlichungsnummer: WO 2005/009773

(56) Entgegenhaltungen:
- EP-A- 0 963 892
- US-A- 5 219 038
- US-A- 6 105 703
- US-A1- 2002 147 537

## Beschreibung

Die Erfindung bezieht sich auf eine Steuervorrichtung für ein zumindest zeitweise vierradgetriebenes Kraftfahrzeug.

Eine Steuervorrichtung für ein zumindest zeitweise vierradgetriebenes Kraftfahrzeug ist beispielsweise aus der dem Oberbegriff entsprechenden EP 0 963 892 A2 bekannt. Bei dieser bekannten Vorrichtung werden für verschiedene Modi (Normalmodus, Startmodus, Lenkmodus und Schlupfmodus) über Kennlinien unterschiedliche Werte für das Kupplungsmoment der Übertragungskupplung für den Vierradantrieb vorgegeben. Die US 5,219,038 offenbart eine Übertragungskupplungssteuerung für den Hochgeschwindigkeitsbereich. Eine Steuervorrichtung für ein zumindest zeitweise vierradgetriebenes Kraftfahrzeug ist beispielsweise auch in der DE 100 54 023 A1 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung). Durch die Festlegung eines Drehmomentverteilungsverhältnisses kann das Fahrverhalten eines Fahrzeuges erheblich beeinflusst werden. Der Gegenstand der DE 100 54 023 A1 beschäftigt sich dabei insbesondere mit der Fahrdynamik bei Kurvenfahrt. Hierbei kann ein zeitweise vierradgetriebenes Kraftfahrzeug ein grundsätzlich vorderradangetriebenes Kraftfahrzeug mit über eine Übertragungskupplung zuschaltbarem Hinterradantrieb, ein grundsätzlich hinterradangetriebenes Kraftfahrzeug mit über eine Übertragungskupplung zuschaltbarem Vorderradantrieb oder ein Permanent-Allradfahrzeug mit regelbarer Übertragungskupplung zur Änderung der Drehmomentverteilung zwischen Vorder- und Hinterachse sein.

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Weiterhin weisen derartige bekannte Steuersysteme meist eine Steuerung der Übertragungskupplung in Abhängigkeit von der Drehzahldifferenz zwischen einer Drehzahl der primären Antriebsachse und der Drehzahl der sekundären Antriebsachse auf (z. B. DE 34 27725 C2).

Es ist Aufgabe der Erfindung, ein Steuersystem eingangs genannter Art im Hinblick auf Bauteilschutz zu verbessern.

Diese Aufgabe wird durch die Merkmale des unabhängigen Patentanspruchs gelöst. Vorteilhafte Weiterbildungen sind die Gegenstände der abhängigen Patentansprüche.

Die Erfindung geht davon aus, dass insbesondere aus fahrdynamischen Gründen grundsätzlich mit steigender Fahrzeuggeschwindigkeit das Soll-Kupplungsmoment reduziert werden sollte. Die der Erfindung zugrundeliegenden Überlegungen gehen jedoch über die bloße Beachtung der Fahrdynamik und des Fahrerwunsches hinaus: Bei jeder mechanischen Konstruktion ist im Hinblick auf die Bauteildimensionierung ein Kompromiss zwischen Kosten- sowie Gewichteinsparung einerseits und Festigkeit andererseits einzugehen. Beim Gegenstand der Erfindung sind insbesondere die Differentiale an den Antriebsachsen sowie die Antriebswellen als zu schützende Bauteile betroffen.

Bei hohen Geschwindigkeiten steht aus fahrdynamischer Sicht die Verhinderung von Verspannungen im Vordergrund. Demnach müsste bei hohen Geschwindigkeiten das gesamte Antriebsmoment grundsätzlich auf die primären Antriebsräder übertragen werden, das Soll-Kupplungsmoment also Null sein. Aus verschleißtechnischer Sicht würde eine solche Steuerung jedoch mit abnehmender Bauteildimensionierung zu einer zunehmenden Temperaturbelastung führen. Diese Problematik wird durch den Teil der erfindungsgemäßen Steuervorrichtung gelöst, der sich auf einen definierten Hochgeschwindigkeitsbereich bezieht.

Bei sehr niedrigen Geschwindigkeiten insbesondere beim Anfahren steht aus fahrdynamischer Sicht die Maximierung der Traktion im Vordergrund. Maximale Traktion wird bei einer Verteilung des Antriebsmoments entsprechend der Achslastverteilung eines Fahrzeuges erreicht. Naturgemäß ist hierbei eine etwa gleichmäßige Verteilung vorteilhaft, die ohnehin automatisch den besten Bauteilschutz zur Folge hat. Daher wird erfindungsgemäß in einem definierten geschwindigkeitsbezogenen Anfahrbereichs eine uneingeschränkte Traktionsoptimierung vorgenommen.

Bei Geschwindigkeiten im Normalbereich (insbesondere Teillast) ist eine bauteilfestigkeitsoptimierende Verteilung des Antriebsmoments besonders günstig, da im Normalbereich die meiste Fahrzeit absolviert wird. D.h. erfindungsgemäß wird eine Verteilung des Antriebsmoments angestrebt, mit der dauerhaft ein Bauteilschutz gewährleistet ist (Zeitfestigkeit bei Langzeitbelastung). Die Verteilung des Antriebsmoments ist dabei in etwa dem am ungünstigsten dimensionierten Bauteil anzupassen. Auch im Normalbereich wäre eher eine verspannungsminimierende Verteilung erstrebenswert. Dies würde eine Verteilung des gesamten Antriebsmoments auf die primäre Antriebswelle bzw. Antriebsachse bedeuten. Wenn jedoch die Bauteile der primären Antriebsachse (insbesondere deren Differential) für einen derartigen Betrieb auf Dauer nicht ausgelegt ist, ist eine Verteilung des Antriebsmoments entsprechend dem auf Dauer ohne Zerstörung auszuhaltenden Anteil des Antriebsmoments vorzugeben.

Grundsätzlich umfassen die den jeweiligen Geschwindigkeitsbereichen zugeordneten geschwindigkeitsbereichbezogenen Kupplungsmomente Konstantwerte ebenso wie Momentenverläufe.

In der Zeichnung ist ein Ausführungsbeispiel der Erfindung dargestellt. Es zeigt
- Fig. 1: schematisch ein zeitweise vierradgetriebenes Fahrzeug mit einer über eine Steuereinheit einstellbaren Übertragungskupplung am Beispiel eines grundsätzlich hinterradangetriebenen Kraftfahrzeugs mit über eine Übertragungskupplung zuschaltbarem Vorderradantrieb
- Fig. 2: Ausschnitte aus der Steuereinheit
- Fig. 3: Beispiel für die Vorgabe geschwindigkeitsbereichbezogener Kupplungsmomente

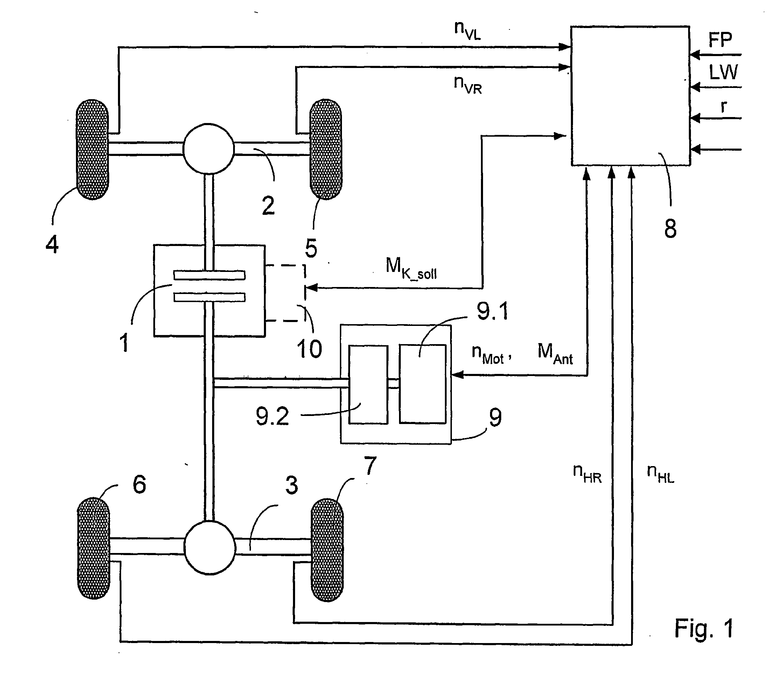

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit 8 einstellbar. Die Steuereinheit 8 kann ein ausgelagertes, z.B. direkt an der Übertragungskupplung 1 angebrachtes Zusatzsteuergerät 10 enthalten, das beispielsweise das vorgegebene Soll-Kupplungsmoment in elektrischen Strom zur Ansteuerung der Verstelleinheit (hier nicht dargestellt) der Übertragungskupplung 1 umsetzt.

Bei einem Fahrzeug nach Fig. 1 wird mit offener Übertragungskupplung 1 das gesamte Drehmoment (Antriebsmoment) der Antriebseinheit 9 auf die Räder 6 und 7 der Hinterachse 3 (primäre Antriebsachse) übertragen. Vorzugsweise besteht die Antriebseinheit 9 aus einer Brennkraftmaschine 9.1, einem Getriebe 9.2 und mindestens einem Antriebssteuergerät (hier nicht näher dargestellt). Das Antriebssteuergerät kommuniziert beispielsweise über den bekannten Kfz.-Datenbus CAN mit der Steuereinheit 8. In Fig. 1 sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 (sekundäre Antriebsachse) an. Somit sind die Vorderräder 4 und 5 die sekundären Antriebsräder.

Die Steuereinheit 8 erfasst zu weiteren Eingangssignalen hinzu insbesondere die Raddrehzahlen n_{VL}, n_{HL}, n_{VR}, n_{HR} aller Räder 4, 5, 6, 7. Aus diesen Raddrehzahlen n_{VL}, n_{HL}, n_{VR}, n_{HR} werden im Zusammenhang mit weiteren in der Steuereinheit 8 vorliegenden Informationen, die Radgeschwindigkeiten v_{VL}, v_{HL}; v_{VR}, v_{HR} aller Räder 4, 5, 6, 7 sowie die Fahrzeuggeschwindigkeit v ermittelt. Die Fahrzeuggeschwindigkeit v kann jedoch auch als ein eigenes Eingangssignal direkt von einem Sensor oder indirekt über ein anderes Steuergerät erfasst werden. Weiterhin erfasst oder ermittelt die Steuereinheit 8 z. B. die Fahrpedalstellung FP, die Motordrehzahl n_{Mot}, das Motormoment (=Brennkraftmaschinen-Drehmoment) oder das Antriebsmoment M_{Ant} (=getriebeausgangsseitiges Kardanwellendrehmoment), den Lenkwinkel LW und die Gierrate bzw. Gierwinkelgeschwindigkeit r.

Zur Verteilung des Antriebsmoments der Antriebseinheit 9 wird ein einzustellendes Kupplungsmoment M_{K_Soll} für die zwischen der Antriebseinheit 9 bzw. den primären Antriebsrädern 6 und 7 und den sekundären Antriebsrädern 4 und 5 angeordneten Übertragungskupplung 1 vorgegeben. Vorzugsweise gibt die Steuereinheit 8 das Soll-Kupplungsmoment M_{K_soll} an das Zusatzsteuergerät 10 aus. Das Zusatzsteuergerät 10 setzt das Soll-Kupplungsmoment M_{K_soll} in einen Strom zur Ansteuerung der hier nicht eigens dargestellten Aktuatorvorrichtung um.

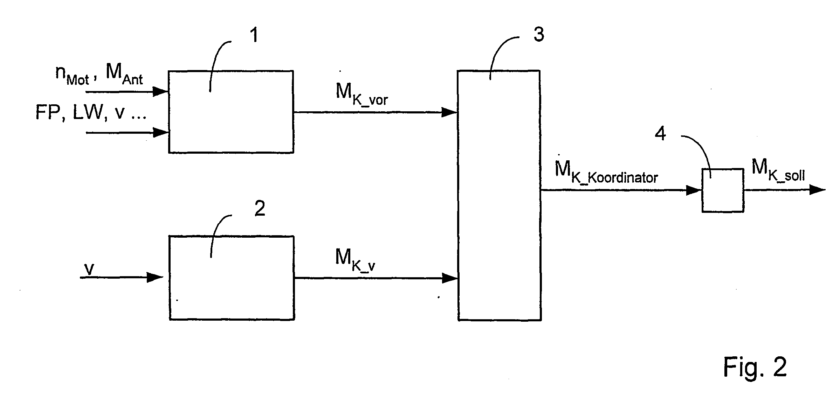

In Fig. 2 sind weitere Details der Steuereinheit 8 gezeigt.

In einer Vorsteuereinheit 1 wird z. B. in Abhängigkeit von der Fahrpedalstellung FP, der Motordrehzahl n_{Mot}, des Motormoments (=Brennkraftmaschinen-Drehmoment) oder das Antriebsmoments M_{Ant} (=getriebeausgangsseitiges Kardanwellendrehmoment), des Lenkwinkels LW und der Fahrzeuggeschwindikeit v ein Vorsteueranteil M_{K_vor} ermittelt.

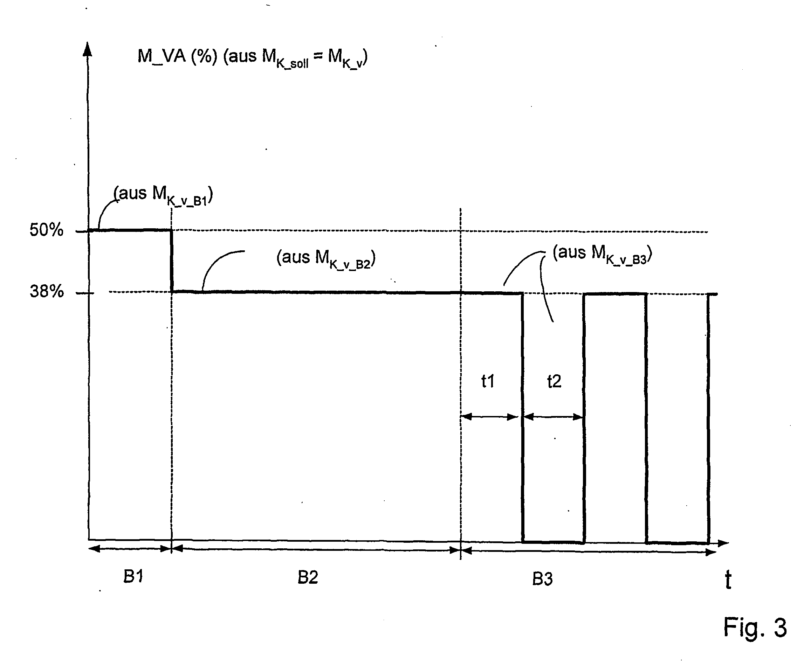

In der Bauteilschutzeinheit 2 wird abhängig von der Fahrzeuggeschwindigkeit v das geschwindigkeitsbereichbezogene Kupplungsmoment M_{K}_ᵥ ermittelt. Dabei werden vorzugsweise drei Geschwindigkeitsbereiche B1, B2 und B3 (vgl. auch Fig. 3) definiert: ein Anfahrbereich B1 (z.B. 0<v<20 km/h), ein Normalbereich B2 (z.B. 20<v<180 km/h) und ein Hochgeschwindigkeitsbereich B3 (z.B. v>180 hm/h). Die drei Geschwindigkeitsbereiche müssen nicht zwangsweise unmittelbar aneinandergrenzen; es können auch zusätzlich Übergangsbereiche definiert werden (hier nicht dargestellt).

Grundsätzlich wird im Anfahrbereich B1 ein höheres geschwindigkeitsbereichbezogene Kupplungsmoment M_{K_v} vorgegeben als im Normalbereich B2. Im Normalbereich B2 wird wiederum grundsätzlich ein höheres geschwindigkeitsbereichbezogene Kupplungsmoment M_{K_v} vorgegeben als im Hochgeschwindigkeitsbereich B3. Dabei können die geschwindigkeitsbereichbezogenen Kupplungsmomente M_{K_v} als maximal zulässige Grenzmomente (M_{K_v_B1}, M_{K_v_B2}, M_{K_v_B3}) im jeweiligen Geschwindigkeitsbereich B1, B2 und B3 vorgegeben werden. Unter dem Begriff Grenzmomente sollen auch Grenzmomentverläufe verstanden werden.

Ein besonders vorteilhaftes Ausführungsbeispiel ist in Fig. 3 dargestellt. In Fig. 3 ist auf der Abszisse die Zeit t und auf der Ordinate der Momentanteil M_VA des Antriebsmoments an den sekundären Antriebsrädern bzw. an der sekundären Antriebsachse in % aufgezeichnet, der sich ergeben würde, wenn das geschwindigkeitsbereichbezogene Kupplungsmoment M_{K_v} als Soll-Kupplungsmoment M_{K}_ₛₒₗₗ tatsächlich eingestellt werden würde. Dies kann von weiteren Bedingungen abhängen.

In Fig. 3 wird bei Vorliegen des Anfahrbereiches B1 ein konstantes Grenzmoment M_{K_v_B1} zum Erreichen eines Momentenanteils M_VA von ca. 50% vorgegeben (traktionsoptimierte Verteilung des Antriebsmoments bei einem Fahrzeug mit einer Achslastverteilung von 1:1). Bei Vorliegen des Normalbereiches B2 wird ein konstantes Grenzmoment M_{K_v_B2} zum Erreichen eines Momentenanteils M_VA von ca. 38% vorgegeben (bauteilfestigkeitsoptimierende Verteilung des Antriebsmoments bei einem Fahrzeug, dessen Differential z. B. an der primären Antriebsachse auf Dauer nur für 62% Antriebsmoment dimensioniert ist). Bei Vorliegen des Hochgeschwindigkeitsbereiches B3 wird die Übertragungskupplung 1 derart periodisch zu- und abgeschaltet, dass sich abwechselnd ein Momentenanteil M_VA von 38% (bauteilfestigkeitsoptimierende Verteilung des Antriebsmoments) und von 0% (verspannungsminimierende Verteilung des Antriebsmoments) ergibt. Das hierfür vorgegebene "Grenzmoment" M_{K_v_B3} ist ein entsprechender Grenzmomentenverlauf. Dadurch ergibt sich auch ein virtuelles Durchschnitts-Grenzmoment unterhalb des Grenzmoments für den Normalbereich B2. Das periodische Zu- und Abschalten der Übertragungskupplung kann vorzugsweise durch ein PWM-Signal vorgenommen werden, wobei das Tastverhältnis (t1/t2) abhängig von der Dimensionierung des zu schützenden Bauteils bestimmbar ist. Hierdurch ist eine Bauteil-Dimensionierungsadaption über die Einschaltdauer t1 möglich. Das abwechselnde Erhöhen und Reduzieren des geschwindigkeitsbereichbezogenen Kupplungsmoments kann z. B. für eine definierte Zeit und ggf. auch nur bei Überschreiten einer definierten Außentemperaturschwelle vorgegeben werden.

In Fig. 2 werden der Vorsteueranteil M_{K_vor} und das geschwindigkeitsbereichbezogene Kupplungsmoment M_{K_v} an eine Koordinatoreinheit 3 ausgegeben. In der Koordinatoreinheit 4 wird zum Bauteilschutz vorzugsweise eine Minimalauswahl aus den beiden Momentenwerten vorgenommen. In einer Weiterverarbeitungseinheit 4 wird z. B. unter Berücksichtigung von fahrdynamischen Regleranteilen und von der Belastung des Aktuators Korrekturen des in der Koordinatoreinheit 4 ermittelten Momentenwertes vorgenommen. Ausgangssignal des Weiterverarbeitungseinheit 4 ist das tatsächlich einzustellende Soll-Kupplungsmoment M_{K_soll}. Das endgültig bestimmte Soll-Kupplungsmoment M_{K_Soll}, das das geschwindigkeitsbereichbezogene Kupplungsmoment M_{K_v} sein kann aber nicht muss, wird vorzugsweise an das Zusatzsteuergerät 10 ausgegeben (vgl. Fig.1).

## Patentansprüche

1. Steuervorrichtung für ein zumindest zeitweise vierradgetriebenes Kraftfahrzeug mit einer Steuereinheit, mittels der das Antriebsmoment einer Antriebseinheit auf primäre Antriebsräder, die permanent mit der Antriebseinheit verbunden sind, und auf sekundäre Antriebsräder, die bedarfsweise über eine Übertragungskupplung mit der Antriebseinheit verbindbar sind, abhängig von Betriebsbedingungen variabel verteilbar ist, indem die Steuereinheit ein Soll-Kupplungsmoment ermittelt, das mittels einer Aktuatorvorrichtung an der Übertragungskupplung einzustellen ist, **dadurch gekennzeichnet, dass** eine Betriebsbedingung die Fahrzeuggeschwindigkeit (v) ist und dass die Steuereinheit (8; 8,10) derart ausgestaltet ist, dass bei der Ermittlung des Soll-Kupplungsmoments (M_{K_soll}) zumindest ein definierter Hochgeschwindigkeitsbereich (B3) berücksichtigt wird und dass ein dem Hochgeschwindigkeitsbereich (B3) zugeordnetes geschwindigkeitsbereichbezogenes Kupplungsmoment (M_{K_v}=M_{K_v_Bs}) als maximal zulässiges Grenzmoment oder als Grenzmomentverlauf vorgegeben wird, wobei das geschwindigkeitsbereichbezogene Kupplungsmoment (M_{K_v}=M_{K_v_B3}) bei Vorliegen des definierten Hochgeschwindigkeitsbereiches (B3) ein Kupplungsmomentverlauf ist, durch den abwechselnd ein Erhöhen und ein Reduzieren des Kupplungsmoments vorgegeben wird, wobei das geschwindigkeitsbereichbezogene Kupplungsmoment (M_{K}_ᵥ=M_{K}_ᵥ__{B3}) abwechselnd auf Null und auf einen bauteilfestigkeitsoptimierenden Wert gesetzt wird.

2. Steuervorrichtung nach Patentanspruch 1, **dadurch gekennzeichnet, dass** zwischen einem definierten geschwindigkeitsbezogenen Anfahrbereich (B1), einem definierten geschwindigkeitsbezogenen Normalbereich (B2) und einem definierten Hochgeschwindigkeitsbereich (B3) unterschieden wird, wobei ein dem Anfahrbereich (B1) zugeordnetes geschwindigkeitsbereichbezogenes Kupplungsmoment (M_{K_v}=M_{K_v_B1}), ein dem Normalbereich (B2) zugeordnetes geschwindigkeitsbereichbezogenes Kupplungsmoment (M_{K_v}=M_{K_v_B2}), ein dem Hochgeschwindigkeitsbereich (B3) zugeordnetes geschwindigkeitsbereichbezogenes Kupplungsmoment (M_{K_v}=M_{K_v_B3}) vorgegeben wird.

3. Steuervorrichtung nach Patentanspruch 2, **dadurch gekennzeichnet, dass** bei Vorliegen eines definierten geschwindigkeitsbezogenen Anfahrbereichs (B1) ein geschwindigkeitsbereichbezogenes Kupplungsmoment (M_{K}_ᵥ=M_{K_v_B1}) derart vorgegeben wird, dass bei Einstellung dieses Kupplungsmoments als Soll-Kupplungsmoment (M_{K_Soll}) eine traktionsoptimierende Verteilung des Antriebsmoments erreicht wird.

4. Steuervorrichtung nach Patentanspruch 2 oder 3, **dadurch gekennzeichnet, dass** bei Vorliegen eines definierten geschwindigkeitsbezogenen Normalbereichs (B2) ein geschwindigkeitsbereichbezogenes Kupplungsmoment (M_{K_v}=M_{K_v_B2}) derart vorgegeben wird, dass bei Einstellung dieses Kupplungsmoments als Soll-Kupplungsmoment (M_{K_soll}) eine bauteilfestigkeitsoptimierende Verteilung des Antriebsmoments erreicht wird.

5. Steuervorrichtung nach einem der Patentansprüche 1 bis 4, **dadurch gekennzeichnet, dass** bei Vorliegen eines definierten Hochgeschwindigkeitsbereichs (B3) ein geschwindigkeitsbereichbezogenes Kupplungsmoment (M_{K_v}=M_{K_v_B3}) derart vorgegeben wird, dass bei Einstellung dieses Kupplungsmoments als Soll-Kupplungsmoment (M_{K_soll}) eine bauteilfestigkeitsoptimierende und gleichzeitig verspannungsminimierende Verteilung des Antriebsmoments erreicht wird.

## Claims

1. A control device for an at least intermittently four-wheel drive motor vehicle with a control unit, by means of which the drive torque of a drive unit can be variably distributed to primary drive wheels, which are permanently connected to the drive unit, and to secondary drive wheels, which can be connected as required to the drive unit by means of a transmission coupling, depending on the operating conditions, in that the control unit determines a desired coupling torque, which is to be adjusted by means of an actuator device at the transmission coupling, **characterised in that** one operating condition is the vehicle speed (v) and **in that** the control unit (8; 8, 10) is configured in such a way that when determining the desired coupling torque (M_{K_desired}), at least one defined high speed range (B3) is taken into account and **in that** a speed range-related coupling torque (M_{K_v}=M_{K_v_B3}) associated with the high speed range (B3) is predetermined as the maximally permissible limit torque or as the limit torque course, the speed range-related coupling torque (M_{K_v}=M_{K_v_B3}), when the defined high speed range (B3) is present, being a coupling torque course, by means of which an increase and a reduction of the coupling torque are alternately predetermined, the speed range-related coupling torque (M_{K_v}=M_{K_v_B3}) being alternately set at zero and a component strength-optimising value.

2. A control device according to claim 1, **characterised in that** a distinction is made between a defined speed-related starting range (B1), a defined speed-related normal range (B2) and a defined high speed range (B3), wherein a speed range-related coupling torque (M_{K_v}=M_{K_v_B1}) associated with the starting range (B1), a speed range-related coupling torque (M_{K_V}=M_{K_v_B2}) associated with the normal range (B2) and a speed range-related coupling torque (M_{K_v}=M_{K_v B3}) associated with the high speed range (B3), are predetermined.

3. A control device according to claim 2, **characterised in that** when a defined speed-relating starting range (B1) is present, a speed range-related coupling torque (M_{K_v}=M_{K_v_B1}) is predetermined in such a way that when adjusting this coupling torque as the desired coupling torque ((M_{K_desired}), a traction-optimising distribution of the drive torque is achieved.

4. A control device according to claim 2 or claim 3, **characterised in that** when a defined speed-related normal range (B2) is present, a speed range-related coupling torque (M_{K_v}=M_{K_v_B2}) is predetermined in such a way that when this coupling torque is adjusted as the desired coupling torque (M_{K_desired}), a component strength-optimising distribution of the drive torque is achieved.

5. A control device according to any one of claims 1 to 4, **characterised in that** when a defined high speed range (B3) is present, a speed range-related coupling torque (M_{K_v}=M_{K_v_B3}) is predetermined in such a way that when adjusting this coupling torque as the desired coupling torque (M_{K_desired}), a component strength-optimising and simultaneously distortion-minimising distribution of the drive torque is achieved.

## Revendications

1. Dispositif de commande d'un véhicule automobile ayant au moins quatre roues, motrices de façon intermittente, comprenant,
- une unité de commande par laquelle le couple moteur d'une unité motrice est réparti de manière variable aux roues motrices primaires reliées en permanence à l'unité motrice et aux roues motrices secondaires qui sont reliées à la demande par un embrayage de transfert à l'unité motrice selon les conditions de fonctionnement,
en ce que l'unité de commande détermine un couple d'embrayage de consigne qui se règle par le dispositif d'actionnement sur l'embrayage de transfert,
**caractérisé en ce que**
- une condition de fonctionnement est la vitesse (v) du véhicule et l'unité de commande (8; 8, 10) est réalisée pour déterminer le couple moteur de consigne (M_{K_soll}), en tenant compte d'au moins une plage définie de vitesse maximale (B3), et
- on prédéfinit un couple d'embrayage (M_{K_v}=M_{k_v_B3}) associé à la vitesse associée, comme couple limite maximum autorisé ou comme courbe de couple limite,
* le couple d'embrayage rapporté à la vitesse (M_{K_v}=M_{k_v_B3}) associé à la plage des vitesses élevées (B3), définie, est une courbe de couple qui prédéfinie une alternance d'augmentation et de la réduction du couple d'embrayage,
* le couple d'embrayage (M_{K_v}=M_{k_v_B3}) rapporté à la vitesse étant fixé en alternance à zéro et à une valeur optimisée pour la résistance des pièces.

2. Dispositif de commande selon la revendication 1,
**caractérisé en ce qu'**
on distingue une plage de démarrage (B1) définie par rapport à la vitesse, une plage normale (B2) rapportée de façon définie à la vitesse et une plage de vitesses élevées (B3) définie, et
on prédéfinit un couple d'embrayage (M_{K_v}=M_{k_v_B1}) rapporté à la vitesse pour la plage de démarrage (B1), un couple d'embrayage (M_{K_v}=M_{k_v_B2}) rapporté à la vitesse pour la plage normale (B2), un couple d'embrayage (M_{K_v}= M_{k_v_B3}) rapporté à la vitesse pour la plage des vitesses élevées (B3).

3. Dispositif de commande selon la revendication 2,
**caractérisé en ce que**
dans le cas d'une plage de démarrage (B1) définie, rapportée à la vitesse, on prédéfinit un couple d'embrayage (M_{K_v}=M_{k_v_B1}) rapporté à la vitesse, et en réglant ce couple d'embrayage comme couple d'embrayage de consigne (M_{K_soll}), on réalise une répartition du couple d'entraînement optimisée en traction.

4. Dispositif de commande selon la revendication 2 ou 3,
**caractérisé en ce qu'**
dans le cas d'une plage normale (B2) rapportée de façon définie à la vitesse, on prédéfinit un couple de consigne (M_{K_v}=M_{k_v_B2}) rapporté à la vitesse, pour qu'en réglant ce couple d'embrayage comme couple d'embrayage de consigne (M_{K_soll}), on réalise une répartition du couple moteur optimisée pour la résistance des composants.

5. Dispositif de commande selon l'une des revendications 1 à 4,
**caractérisé en ce qu'**
dans le cas d'une plage de vitesses élevées définie (B3), on prédéfinit un couple d'embrayage (M_{K_v}=M_{k_v_B3}) rapporté à la vitesse de façon qu'en réglant ce couple d'embrayage comme couple d'embrayage de consigne (M_{K_soll}), on réalise une répartition du couple moteur, optimisé pour la résistance des pièces et réduisant en même temps les contraintes.
